# EUROPÄISCHE PATENTSCHRIFT

(11) **EP 2 890 733 B1**
(45) Veröffentlichungstag und Bekanntmachung des Hinweises auf die Patenterteilung: **27.07.2016**
(21) Anmeldenummer: 13700057.6
(22) Anmeldetag: 02.01.2013
(51) Int. Cl.: C08J 11/10, C08J 11/28, C08K 5/372, C08K 5/5398, C08K 5/548, C08L 19/00

(54) **VERFAHREN ZUR REGENERIERUNG VON SCHWEFELVERNETZTEN GUMMIVULKANISATEN ZU REGENERATEN**
PROCESS FOR REGENERATING SULFUR-CROSSLINKED RUBBER VULCANIZATES TO REGENERATES
PROCÉDÉ DE RÉGÉNÉRATION DE VULCANISATS DE CAOUTCHOUC RÉTICULÉS AU SOUFRE POUR FORMER DES RÉGÉNÉRATS

(30) Priorität: 31.08.2012 DE 102012108096
(43) Veröffentlichungstag der Anmeldung: 08.07.2015
(73) Patentinhaber: Continental Reifen Deutschland GmbH, 30165 Hannover (DE)
(72) Erfinder: MÜLLER, Lena, 31714 Lauenhagen (DE); RECKER, Carla, 30167 Hannover (DE); VÖLKER, Thomas, 30926 Seelze (DE)
(74) Vertreter: Finger, Karsten
(86) Internationale Anmeldenummer: PCT/EP2013/050006
(87) Internationale Veröffentlichungsnummer: WO 2014/032818

(56) Entgegenhaltungen:
- WO-A1-2008/148706
- DE-A1-102005 029 522

## Beschreibung

Die Erfindung betrifft ein Verfahren zur Regenerierung von schwefelvernetzten Gummivulkanisaten zu Regeneraten. Ferner betrifft die Erfindung die Verwendung des nach dem Verfahren hergestellten Regenerates für die Herstellung von Fahrzeugluftreifen. Die Beseitigung und Verwertung von Gummiabfällen aus unterschiedlichen Industriebereichen stellt sowohl im Hinblick auf die Umweltbelastung als auch auf die Wiederverwertung ein ständig wachsendes Problem dar, da weltweit die Menge an Gummiabfällen stetig steigt.

Jährlich fallen aktuell beispielsweise weltweit viele Millionen Tonnen an Altreifen an, ca. 25 % davon sind Nutzfahrzeugreifen. Allein in Europa fallen momentan ca. 3,2 Mio. Tonnen Altreifen pro Jahr an, wobei der Anteil an Nutzfahrzeugaltreifen bei ca. 0,8 Mio. liegt. Ein großer Teil der Altreifen wird in der Zementindustrie einer energetischen Nutzung zugeführt und steht damit bei zunehmender Rohstoffknappheit einer weiteren stofflichen Nutzung nicht mehr zur Verfügung.

Bisher gibt es nur sehr eingeschränkte Möglichkeiten einer stofflichen Nutzung von Gummiabfall, insbesondere Altreifenmaterial, in Form von Granulat oder Pulver in Mischungen für neue Produkte, wie Neureifen. Die wichtigste stoffliche Nutzung ist der Einsatz des aus Gummiabfall hergestellten Gummigranulats oder Gummipulvers, auch Gummimehl genannt, verschiedener Korngrößen in Gummimatten oder anderen dynamisch nicht belasteten Gummiprodukten.

Die Gummigranulate oder Gummipulver aus Altreifen können in geringen Mengen frisch hergestellten Reifenmischungen in der Reifenproduktion als Zuschlagstoff zugesetzt werden. Ihr Einsatz ist aber in der Menge sehr stark beschränkt, da die Granulatpartikel in der frischen Reifenmischung wie kleine Fremdkörper wirken. Ursache für dieses Verhalten ist unter anderem, dass Festigkeit und Dehnung des Altreifengranulates deutlich von denen der Frischmischung nach der Vulkanisation in der Reifenmischung abweichen. Die Reifengranulatpartikel werden bei der Vulkanisation im neuen Produkt dann zum zweiten Mal vulkanisiert. Die erste Vulkanisation des Reifengranulates wurde bereits im Altreifen, dem Ausgangsmaterial für das Reifengranulat, durchgeführt. Die nun zum zweiten Mal vulkanisierten Altreifenpartikel zeigen an der Grenzfläche zur frischen Reifenmischung einen Unterschied im Festigkeits-/Dehnungsverhalten, was die dynamische Leistungsfähigkeit nachteilig beeinflussen kann. In vielen Gummiprodukten, die dynamisch nicht belastet werden, wie z. B. Gummimatten, Ständer für mobile Verkehrsschilder an Baustellen oder schräge Bordsteinauffahrten, kann Reifengranulat oder auch Granulat aus anderen Gummiprodukten den Frischmischungen zugesetzt werden, da in diesem Fall keine dynamische Beanspruchung wie beispielsweise im Reifen vorliegt.

Um Gummiabfälle wie Altreifengranulat dennoch für den Einsatz in Gummiprodukten wieder hochwertig nutzen zu können, ist es bekannt diese zu regenerieren. In einem Regenerierprozess wird das vulkanisierte Reifengranulat plastifiziert, d.h. es wird vom elastischen Zustand in einen plastischen Zustand überführt, indem die durch die Vulkanisation gebildeten Schwefelbrücken abgebaut werden. Das entstandene Regenerat kann somit wieder einer frischen Kautschukmischung als Rohmaterial zugesetzt und darin durch Vulkanisation angebunden werden.
Neben dem Abbau der Schwefelbrücken werden bei den im Stand der Technik bekannten Regenerierprozessen in nicht unerheblichem Maß auch Kautschukketten, also Kohlenstoff-Kohlenstoff-Verbindungen, abgebaut. Ein derartiges Abbauverhalten ist üblicherweise unerwünscht. Die kürzeren (abgebauten) Polymerketten des Regenerates verursachen in daraus hergestellten Vulkanisaten Nachteile in den physikalischen Eigenschaften, wie z.B. den Rückprallelastizitäten, was sich z.B. in einem erhöhten Rollwiderstand von Fahrzeugluftreifen widerspiegelt.

Es sind zahlreiche Verfahren zum Regenerieren oder Devulkanisieren von vulkanisiertem Gummigranulat/-mehl bekannt. Alle Verfahren haben zum Ziel, dass die Vernetzungsstruktur regeneriert, d.h. aufgespalten, wird. Durch die Einwirkung von thermischer und mechanischer Energie auf Walzwerken oder in Mischern sowie unter Zuhilfenahme von unterschiedlichen schwefelbrückenabbauenden Chemikalien werden Schwefelbrücken abgebaut. Dieser Vorgang wird allgemein als Regeneration bezeichnet. Wie oben beschrieben muss oft der Nachteil in Kauf genommen werden, dass die Moleküle des vulkanisierten Gummigranulats/-mehls zusätzlich depolymerisiert werden. Das bei den vorgenannten Prozessen entstehende, nun plastische Produkt mit einer definierten Viskosität ist als Regenerat für vielfältige Zusätze zu Reifen- und technischen Gummimischungen am Markt erhältlich und zeigt die negativen Eigenschaften von nicht regeneriertem Gummigranulat/-mehl in dynamisch belasteten Produkten in deutlich verringertem Maße.

Verfahren zur Regenerierung von schwefelvernetzten Gummivulkanisaten unter Zuhilfenahme von verschiedenen Substanzen und in unterschiedlichen Apparaturen sind seit langem bekannt, wobei die Dampfregeneration, die mechanische Regeneration, die thermische Regeneration, die Regeneration durch Schallwellen, die Regeneration durch Strahlung und die chemische Regeneration bekannt sind.

Typische Regenerierungsmittel sind Sulfide mit oder ohne Aminsubstituenten, wie z.B. Tolyldisulfide und Dixylyldisulfide, Mercaptan-Derivate, wie z.B. 2-Mercaptobenzothiazol, sowie Hydroxid-Ionen. Derartige Agenzien beschleunigen die oxidative Spaltung von Schwefelbrücken vulkanisierter Elastomere bei der Regenerierung. Des Weiteren sind quellend wirkende Regenerieröle, wie Tallöl oder Harzöl, bekannt, die das zu regenerierende Vulkanisat aufquellen und damit dessen Oberfläche erhöhen, sodass die oxidative Regenerierung beschleunigt erfolgen kann.

Oft werden diese verschieden wirkenden Agenzien in Kombination eingesetzt, wie bspw. in der Römpp Online Version 3.26 beschrieben: "Beim längerdauernden Erhitzen von Kautschukvulkanisaten (Altreifen) auf 150-250 °C in Gegenwart von Regeneriermitteln wie Ditolyl- oder Dixylyldisulfid zur Kettenspaltung und Tallöl oder Harzöl zum Quellen erhält man Regenerate, die erneut vulkanisierbar sind."
Nachteilig sind die vergleichsweise hohen Temperaturen, die erforderlich sind, um die Regenerierung mittels derartiger Agenzien durchzuführen. Hohe Temperaturen erhöhen üblicherweise die Prozesskosten und wirken sich nachteilig auf die Länge der Polymerketten aus.

Aus der WO 2008/148706 A1 sind Verfahren zur Regenerierung von schwefelvernetzten Gummivulkanisaten bekannt, bei denen man mindestens ein Dialkylpolysulfid als Regenerierungsmittel verwendet. Als Dialkylpolysulfide können z. B. verzweigtes Dioctylpentasulfid oder Dioctyltetrasulfid eingesetzt werden. Die damit hergestellten Regenerate zeigen weiterhin Nachteile hinsichtlich der physikalischen Eigenschaften, insbesondere des Wärmeaufbaus in Vulkanisaten.

WO 2008/148706 A1 betrifft ein Verfahren zur Regenerierung von Schwefelvernetzten Gummivulkanisaten, bei denen man mindestens ein Dialkylpolysulfid als Regenerierungsmittel verwendet. Als Dialklypolysulfide können z.B. verzweigtes Dioctylpentasulfid oder Dioctyltetrasulfid eingesetzt werden.

DE 10 2005 029522 A1 betrifft eine schwefelvemetzbare Kautschukmischung enthaltend ein Silan-Kupplungsagens (bifunktionelles Organosilan). Als Silan Kupplungsagens Bis(3-triethoxysilylpropyl)tetrasulfan wird verwendet.

Der vorliegenden Erfindung liegt daher die Aufgabe zugrunde, ein Verfahren zur Regenerierung von schwefelvernetzten Gummivulkanisaten zu Regeneraten bereitzustellen, welches im Vergleich zum Stand der Technik eine Verbesserung des Abbauverhaltens bei einer milderen Prozessführung, also niedrigeren Temperaturen bei einer kürzeren Dauer, ermöglicht. Die mit dem Verfahren hergestellten Regenerate sollen im Vergleich zu den aus dem Stand der Technik bekannten Regeneraten in Kautschukmischungen verbesserte oder zumindest gleiche Rollwiderstandsindikatoren sowie ein verbessertes Druckverformungsverhalten ermöglichen. Gleichzeitig sollen die eingesetzten Agenzien keine oder möglichst wenig oder wenig kritische Gefahrstoffmerkmale gemäß Gefahrstoffverordnung aufweisen.

Gelöst wird die Aufgabe erfindungsgemäß dadurch, dass man bei der Regenerierung wenigstens ein Regenerierungsmittel verwendet, wobei das Regenerierungsmittel ausgewählt ist aus der Gruppe bestehend aus Dithiophosphorylpolysulfiden und/oder Silanen mit einer Polysulfangruppe.

Es hat sich überraschenderweise herausgestellt, dass durch die Verwendung eines derartigen Regenerierungsmittels ein selektives Verfahren bei vergleichsweise niedrigen Temperaturen und einer kurzen Verfahrensdauer zu einem verbesserten Abbauverhalten führt, was sich u.a. in der Verbesserung der Rollwiderstandsindikatoren von vulkanisierten Kautschukmischungen, die die mit dem erfindungsgemäßen Verfahren hergestellten Regenerate erhalten, widerspiegelt. Gleichzeitig zeigen die Vulkanisate mit den Regeneraten, die mit dem erfindungsgemäßen Verfahren hergestellt wurden, ein verbessertes Druckverformungsverhalten im Vergleich zu Vulkanisaten, die ein Regenerat enthalten, welches mittels im Stand der Technik bekannten Regenerierungsmitteln hergestellt wurde.

Gemäß einer bevorzugten Ausführungsform der Erfindung weist das Dithiophosphorylpolysulfid die allgemeine Formel I 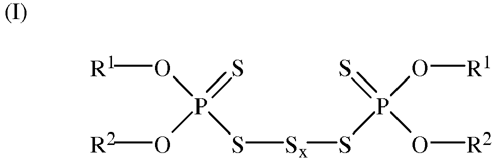 auf, wobei R¹ und R² gleich oder verschieden sind und ausgewählt sind aus linearen oder verzweigten C₃- bis C₂₀-Alkylresten und x = 1 bis 6 ist.

Besonders bevorzugt ist das Dithiophosphorylpolysulfid ein Bis-(0,0-2-Ethylhexyl-) Thiophosphorylpolysulfid.

Gemäß einer bevorzugten Ausführungsform der Erfindung verwendet man als Regenerierungsmittel wenigstens ein Silan mit einer Polysulfangruppe der allgemeinen Formel II oder ein Gemisch enthaltend wenigstens ein Silan mit einer Polysulfangruppe der allgemeinen Formel II

(II) (R²O)_{3-y}R³_{y}-Si-R¹-Sₓ-R¹-Si-(OR²)_{3-z}R³_{z}

als Regenerierungsmittel, wobei x = 1 bis 8 ist und wobei die R¹ in einem Molekül gleich oder verschieden sind und ausgewählt sind aus linearen oder verzweigten C₁- bis C₁₈-Alkylresten, wobei die R² und R³ in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind.

Die Zahl der Wasserstoffatome der Alkylreste ergibt sich aus der Zahl der Kohlenstoffatome.

Bevorzugt ist x = 1 bis 5, besonders bevorzugt ist x = 2 bis 4 und in einer ganz besonders bevorzugten Ausführungsform ist x = 4.

Gemäß einer besonders bevorzugten Weiterbildung ist das Silan mit einer Polysulfangruppe ein Bis(trialkoxysilyl)propylpolysulfan. Hierbei ist z = 0, R¹ ein Propylrest und R² ein Alkylrest mit 1 bis 30 Kohlenstoffatomen. Dieses Silan hat die allgemeine Konstitutionsformel III

(III) (R²O)₃-Si-(CH₂)₃-Sₓ-(CH₂)₃-Si-(OR²)₃.

Ganz besonders bevorzugt ist der Rest R² eine Ethylgruppe, so dass es sich bei dem Silan mit einer Polysulfangruppe um ein Bis(triethoxysilyl)propylpolysulfan handelt.

Gemäß einer weiteren bevorzugten Weiterbildung dieser Ausführungsform der Erfindung enthalten die Reste R² und/oder R³ des Silans mit einer Polysulfangruppe zusätzlich 1 bis 10 Stickstoffatome (N) und/oder Sauerstoffatome (O) als Heteroatome in der Kohlenstoffkette. Es ist gemäß dieser Weiterbildung der Erfindung denkbar, dass die Reste R² und/oder R³ z.B. eine Einheit mit der Konstitutionsformel IV (IV) -(CH₂-CH₂-O)₅-(CH₂)₁₂CH₃ darstellen.

In diesem Fall enthalten die Reste R² und/oder R³ fünf Sauerstoffatome als Heteroatome.

In einer weiteren Ausführungsform der Erfindung weist das Silan mit einer Polysulfangruppe die allgemeine Formel V

(V) (R²O)_{3-y}R_{3y}-Si-R¹-Sₓ-R¹-Si-(O₂R²)R³

auf, wobei x = 1 bis 8 ist und wobei die R1 in einem Molekül gleich oder verschieden sind und ausgewählt sind aus linearen oder verzweigten C₁- bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind und wobei die R³ in einem Molekül gleich oder verschieden sind und ausgewählt sind aus linearen oder verzweigten C₁-bis C₁₀-Alkyl-oder Alkoxyresten.

In dieser Ausführungsform kann ein Rest R² zwei Sauerstoffatome miteinander verbrücken.

In einer weiteren Ausführungsform der Erfindung weist das Silan mit einer Polysulfangruppe die allgemeine Formel VI

(VI) (R²O₂)R³-Si-R¹-Sₓ-R¹-Si-(O₂R²)R³

auf, wobei x = 1 bis 8 ist und wobei die R¹ in einem Molekül gleich oder verschieden sind und ausgewählt sind aus linearen oder verzweigten C₁- bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei die R³ in einem Molekül gleich oder verschieden sind und ausgewählt sind aus linearen oder verzweigten C₁-bis C₁₀-Alkyl- oder Alkoxyresten.
In dieser Ausführungsform kann ein Rest R² an beiden Enden des Moleküls zwei Sauerstoffatome miteinander verbrücken.

Der vorliegenden Erfindung liegt die weitere Aufgabe zugrunde, ein weiteres Verfahren zur Regenerierung von schwefelvernetzten Gummivulkanisaten zu Regeneraten bereitzustellen, welches im Vergleich zum Stand der Technik eine Verbesserung des Abbauverhaltens bei einer milderen Prozessführung ermöglicht. Die mit dem Verfahren hergestellten Regenerate sollen im Vergleich zu den aus dem Stand der Technik bekannten Regeneraten in Kautschukmischungen verbesserte oder zumindest gleiche Rollwiderstandsindikatoren sowie ein verbessertes Druckverformungsverhalten ermöglichen. Gleichzeitig sollen die eingesetzten Agenzien nicht oder möglichst wenig giftig sein.

Diese weitere Aufgabe wird dadurch gelöst, dass das erfindungsgemäße Verfahren wenigstens folgende Verfahrensschritte enthält:
- Vorlegen des zu regenerierenden schwefelvernetzten Gummivulkanisates in Mengen von 68 bis 98 Gew.-% in einem Innenmischer und
- Erwärmen des zu regenerierenden schwefelvernetzten Gummivulkanisates auf 50 bis 70°C und
- Zugabe wenigstens eines Dithiophosphorylpolysulfides und/oder wenigstens eines Silanes mit einer Polysulfangruppe in Mengen von 2 bis 15 Gew.-% und
- Durchmischen der genannten Bestandteile zu einer Mischung für eine Dauer von 5 bis 35 Minuten bei einer Temperatur von 80 bis 150 °C.

Hierbei gelten für das Dithiophosphorylpolysulfid und das Silan mit einer Polysulfangruppe die oben bereits beschriebenen Ausführungen bzgl. der Konstitutionsformeln und der bevorzugten Ausführungsformen und Weiterbildungen.

Bei dem erfindungsgemäßen Verfahren wird also in einem Innenmischer ein Gemisch erzeugt, welches vor der Regenerierung bei 100 Gew.-% Gesamtmenge 68 bis 98 Gew.-% des zu regenerierenden Gummivulkanisates und 2 bis 15 Gew.-% wenigstens eines Dithiophosphorylpolysulfides und/oder wenigstens eines Silanes mit einer Polysulfangruppe enthält. Aus diesem Gemisch entstehen bei der Durchführung des Verfahrens das Regenerat oder die Regenerate.
Bevorzugt enthält das Gemisch vor der Regenerierung 85 bis 97 Gew.-%, besonders bevorzugt 85 bis 95 Gew.-% und ganz besonders bevorzugt 89 bis 93 Gew.-% des zu regenerierenden Gummivulkanisates.
Die Menge des wenigstens einen Dithiophosphorylpolysulfides und/oder wenigstens einen Silanes mit einer Polysulfangruppe beträgt bevorzugt 2 bis 12 Gew.-%, besonders bevorzugt 2 bis 12 Gew.-%, ganz besonders bevorzugt 4 bis 10 Gew.-%.

Zusätzlich kann das Gemisch derart zusammengesetzt sein, dass es bei 100 Gew.-% weitere Zusatzstoffe enthält. Dies bedeutet, dass als zusätzlicher Verfahrensschritt vor oder nach der Zugabe wenigstens eines Dithiophosphorylpolysulfides und/oder wenigstens eines Silanes mit einer Polysulfangruppe die Zugabe eines oder mehrerer Zusatzstoffe erfolgt.
Weitere Zusatzstoffe beinhalten Schwefel, Weichmacher, wie Öle, und Füllstoffe wie z.B. Ruß oder Kieselsäure.

Gemäß einer bevorzugten Ausführungsform der Erfindung enthält das Gemisch 0,1 bis 10 Gew.-% Schwefel, besonders bevorzugt 1 bis 8 Gew.-% Schwefel.

Gemäß einer weiteren bevorzugten Ausführungsform der Erfindung enthält das Gemisch zusätzlich 0,1 bis 15 Gew.-%, besonders bevorzugt 1 bis 3 Gew.-% wenigstens eines Öles.

Gemäß einer weiteren bevorzugten Ausführungsform der Erfindung enthält das Gemisch 0,1 bis 10 Gew.-% wenigstens eines Füllstoffs. Der Füllstoff kann ein in der Reifenindustrie üblicher Füllstoff sein, wie Ruß und/oder Kieselsäure.

Besonders bevorzugt enthält das Gemisch 0,1 bis 8 Gew.-%, ganz besonders bevorzugt 1 bis 3 Gew.-% wenigstens eines Rußes und/oder wenigstens einer Kieselsäure.
Die Kieselsäure hat dabei bevorzugt eine CTAB-Oberfläche gemäß ASTM D 3765 von 110 bis 350 m²/g.
Es ist im Rahmen der Erfindung denkbar, dass nur einer der genannten Zusatzstoffe oder zwei oder mehrere der genannten Zusatzstoffe vor der Regenerierung in wenigstens einem weiteren Verfahrensschritt zugeführt werden.

Das erfindungsgemäße Verfahren zur Regenerierung wird in einem Innenmischer mit ineinandergreifenden oder tangierenden Rotoren durchgeführt. Das Füllvolumen des Innenmischers beträgt 50 bis 95%, bevorzugt 60 bis 90%, besonders bevorzugt 62 bis 85%.

Vorteilhaft ist es im Rahmen der vorliegenden Erfindung, wenn das zu regenerierende schwefelvernetzte Gummivulkanisat vor der Regenerierung in einem weiteren Verfahrensschritt zu einem Granulat zerkleinert wird.

Die Partikelgröße des Granulates beträgt gemäß DIN 53734 nach dem Zerkleinern 0,001 bis 70 mm, bevorzugt 0,001 bis 20 mm, besonders bevorzugt 0,001 bis 0,5 mm, ganz besonders bevorzugt 0,001 bis 0,4 mm. Die Form der Granulat-Partikel kann dabei nach dem Zerkleinern sphärisch, flächig oder länglich sein.

Das Zerkleinern des schwefelvernetzten Gummivulkanisates erfolgt mittels im Stand der Technik bekannten Mahlverfahren, insbesondere einem ambienten oder kryogenen Mahlverfahren.

Alternativ zu dem Innenmischer kann das Verfahren zur Regenerierung auf einer oder mehreren Walzwerken, auf einem Planetwalzenextruder, auf einem Doppelschneckenextruder oder einem Einschneckenextruder durchgeführt werden. Die Temperatur beträgt hierbei 40 bis 150 °C bei einer Dauer von 5 bis 35 Minuten.

Bevorzugt ist es bei dem erfindungsgemäßen Verfahren, wenn die schwefelvernetzten Gummivulkanisate aus Altreifen oder Förderbändern oder aus bei der Produktion von technischen Kautschukartikeln oder Fahrzeugluftreifen anfallendem vulkanisiertem Abfall stammen.

Das schwefelvernetzte Gummivulkanisat kann dabei auf folgenden Kautschuken alleine oder im Verschnitt basieren: natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk und/oder Nitril-ButadienKautschuk (NBR) und/oder Hydrierter Acrylnitrilbutadien-Kautschuk (HNBR) und/oder Ethylen-Propylen-Dien-Kautschuk (EPDM).

Bevorzugt enthält das schwefelvernetzte Gummivulkanisat natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk.

Weiterhin liegt der vorliegenden Erfindung die Aufgabe zu Grunde, ein Regenerat bereitzustellen, welches im Vergleich zum Stand der Technik in Kautschukmischungen bessere oder zumindest gleiche Rollwiderstandsindikatoren und einen geringeren Druckverformungsrest ermöglicht. Gelöst wird die Aufgabe durch die oben genannten erfindungsgemäßen Verfahren.
Bevorzugt wird das erfindungsgemäße Regenerat zur Herstellung eines Fahrzeugluftreifens verwendet, wobei das Regenerat bevorzugt in wenigstens einer Kautschukmischung wenigstens eines Bauteils eines Fahrzeugluftreifens als Mischungsbestandteil enthalten ist. Das Regenerat ist weiterhin zur Herstellung von technischen Kautschukartikeln wie z.B. Transportbändern, Riemen, Gurten, Schläuchen, Drucktüchern, Luftfedern oder Dämpfungselementen geeignet, wobei es auch hier als Mischungsbestandteil wenigstens einer Kautschukmischung in diesen Artikeln enthalten ist.

Die Erfindung soll nun anhand von Vergleichs- und Ausführungsbeispielen näher erläutert werden.

Zunächst wurden Regenerate hergestellt, und zwar erfindungsgemäße Regenerate (ER1 und ER2) nach dem erfindungsgemäßen Verfahren mit zwei verschiedenen Regenerierungsmitteln und die Regenerate RG3 und RG4 mittels im Stand der Technik bekannten Regenerierungsmitteln.

Die Herstellung des Regenerates ER1 aus vulkanisierten Gummivulkanisaten erfolgte mit den Verfahrensschritten in folgender Reihenfolge:
- Zerkleinern des schwefelvernetzten Gummivulkanisates mittels einem kryogenen Mahlverfahren (Stiftmühle) zu einem Granulat mit der Partikelgröße 0,001 bis 0,5 mm
- Vorlegen von 90,7 Gew.-% des zerkleinerten zu regenerierenden schwefelvernetzten Gummivulkanisates in einem Innenmischer
- Erwärmen des zerkleinerten zu regenerierenden schwefelvernetzten Gummivulkanisates auf 60 °C
- Zugabe von 2 Gew.-% Ruß (N121)
- Zugabe von 5,5 Gew.-% Regenerierungsmittel (Bis(triethoxysilyl)propyltetrasulfan (TESPT))
- Zugabe von 2 Gew.-% TDAE-Ö1 (TDAE = treated aromatic extract)
- Durchmischen der genannten Bestandteile zu einer Mischung für eine Dauer von 20 Minuten bei einer Temperatur von 100 °C
- Abkühlen der Mischung

Die Herstellung der Regenerate ER2 sowie RG3 und RG4 erfolgte analog und zwar unter Zugabe folgender Regenerierungsmittel:
ER2: 5,5 Gew.-% Bis(O,O-2-ethylhexyl-thiophosphoryl)Polysulfid, Rhenocure SDT 50^{®},
Fa. Rheinchemie GmbH
RG3: 5,5 Gew.-% CBS (=N-Cyclohexyl-2-benzothiazolsulfenamid),
RG4: 5,5 Gew.-% Dioctylpentasulfid, Aktiplast^{®} GE1979, Fa. Rheinchemie GmbH

Die mit den verschiedenen Regenerierungsmitteln hergestellten Regenerate wurden jeweils in Mengen von 60 phr einer Kautschukmischung (Basismischung) B1 zugesetzt, jeweils in Mengen von 82 phr einer Kautschukmischung (Basismischung) B2 zugesetzt und jeweils in Mengen von 43 phr einer Kautschukmischung (Basismischung) B3 zugesetzt, deren Zusammensetzungen aus der Tabelle 1 hervorgehen.

**Tabelle 1**

| Bestandteile Basismischung | Einheit | B1 | B2 | B3 |
|---|---|---|---|---|
| NR | phr | 100 | 30 | 40 |
| IR | phr | -- | -- | 10 |
| BR | phr | -- | 3 | 20 |
| SBR | phr | -- | -- | 30 |
| SSBR | phr | -- | 67 | -- |
| Ruß N121 | phr | 47 | -- | -- |
| Ruß N339 | phr | -- | 18 | 30 |
| Kieselsäure, BET:200 m²/g | phr | -- | 85 | -- |
| Silan, TESPD | phr | -- | 7,4 | -- |
| Weichmacher TDAE | phr | 2 | 37 | 8 |
| Alterungsschutzmittel | phr | 6 | 7,8 | 8 |
| Zinkoxid | phr | 3 | 4,5 | 2,5 |
| Stearinsäure | phr | 2 | 1 | 2,25 |
| Beschleuniger DPG* | phr | -- | 2,2 | -- |
| Beschleuniger CBS* | phr | -- | 2,5 | 1 |
| Beschleuniger TBBS* | phr | 0,75 | -- | -- |
| Schwefel* | phr | 1,65 | 1,7 | 2,2 |

| | | | | |
|---|---|---|---|---|
| * Eine Anpassung gemäß Gibala D, Hamed GR.: Cure and mechanical behavior of rubber compounds containing ground vulcanizates - Parte I - Cure behavior, Rubber Chemistry and Technology, 1997; 67(1):636-648 ist gegebenenfalls sinnvoll und zweckmäßig. | | | | |

Die Mischungsherstellung erfolgte unter üblichen Bedingungen in mehreren Stufen in einem Labortangentialmischer. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) und 70 °C gemäß DIN 53 505
- Rückprallelastizitäten bei Raumtemperatur (RT) und 70 °C gemäß DIN 53 512,
- Zugfestigkeit bei Raumtemperatur gemäß DIN 53 504
- Reißdehnung bei Raumtemperatur gemäß DIN 53 504
- Spannungswert 300 % Dehnung bei Raumtemperatur (Modul 300) gemäß DIN 53 504
- Druckverformungsrest in Anlehnung an die DIN ISO 815-1
- Abrieb bei Raumtemperatur gemäß DIN/ISO 4649
- Relativer Vernetzungsgrad von 5% bzw 10% (t5, t10 Anvulkanisationszeit) mittels rotorlosem Vulkameter (MDR = Moving Disc Rheometer) gemäß DIN 53 529

Des Weiteren wurden Vulkanisate der Kautschukmischungen für 14 Tage bei 70 °C an Luft gealtert und ebenfalls deren physikalischen Eigenschaften bestimmt.

Die Ergebnisse der Messungen sowie die Zuordnung der eingesetzten Regenerate zu den Varianten sind in den Tabelle 2 und 3 zusammengefasst. Hierbei enthalten die Kautschukmischungen E1 60 phr des Regenerates ER1, E2 60 phr des Regenerates ER2, E3 82 phr TESPD und E4 43 phr TESPD.
Die Kautschukmischungen V1 und V2 enthalten 60 phr des Regenerates RG3 bzw. 60 phr des Regenerates RG4. Die Kautschukmischung V4 enthält 82 phr des Regenerates RG4 und die Kautschukmischung V5 enthält 43 phr des Regenerates RG4.

Als weiteres Vergleichsbeispiel enthält die Kautschukmischung V3 60 phr des Regenerates RG5, welches ein unter dem Handelsnamen ECORR RNR 30 der Fa. RubberResources kommerziell erhältliches Regenerat ist.
Als Referenz dienen die Kautschukmischungen Ref1, Ref2 und Ref3, die kein Regenerat enthalten und daher die in Tabelle 1 angegebenen Zusammensetzungen aufweisen.

**Tabelle 2**

| | **Einheit** | **Ref1** | **V1** | **V2** | **V3** | **E1** | **E2** |
|---|---|---|---|---|---|---|---|
| Regenerat | | - | RG3 | RG4 | RG5 | ER1 | ER2 |
| | | | | | | | |

| **Physikalische Eigenschaften vor der Alterung** | | | | | | | |
|---|---|---|---|---|---|---|---|
| Shore Härte bei RT | Shore A | 62 | 63 | 60 | 60 | 62 | 57 |
| Shore Härte bei 70 °C | Shore A | 57 | 58 | 55 | 54 | 58 | 52 |
| Rückprallelast. b. RT | % | 46 | 44,5 | 41 | 40,5 | 45 | 46 |
| Rückprallelast. b. 70 °C | % | 61 | 59 | 55 | 54 | 58 | 59 |
| Zugfestigkeit | MPa | 23 | 20 | 20 | 18 | 20 | 17 |
| Modul 300 | MPa | 13 | 13 | 11 | 11 | 12 | 11 |
| Reißdehnung | % | 496 | 452 | 506 | 494 | 467 | 434 |
| Abrieb | mm³ | 104 | 117 | 122 | 130 | 117 | 117 |
| Druckverformungsrest b. 70 °C | % | 28 | 35 | 37 | 36 | 33 | 35 |
| t10 | min | 2,2 | 1,0 | 1,7 | 2,1 | 2,2 | 0,72 |
| t5 | min | 1,63 | 0,6 | 0,2 | 1,7 | 1,9 | 0,17 |
| | | | | | | | |

| **Physikalische Eigenschaften nach der Alterung für 14 Tage bei 70 °C, Luft** | | | | | | | |
|---|---|---|---|---|---|---|---|
| Shore Härte bei RT | Shore A | 67 | 69 | 67 | 67 | 68,5 | |
| Shore Härte bei 70 °C | Shore A | 64 | 66 | 63 | 63 | 65 | |
| Rückprallelast. b. RT | % | 47 | 47 | 43 | 43 | 46 | |
| Rückprallelast. b. 70 °C | % | 63 | 61 | 58 | 59 | 60 | |
| Zugfestigkeit | MPa | 24 | 18 | 18 | 16 | 18 | |
| Modul 300 | MPa | 17 | 17 | 15 | 15 | 17 | |
| Reißdehnung | % | 438 | 338 | 389 | 359 | 346 | |

**Tabelle 3**

| | **Einheit** | **Ref2** | **V4** | **E3** | **Ref3** | **E4** | **V5** |
|---|---|---|---|---|---|---|---|
| Regenerat | | - | RG4 | TESPD | - | RG4 | TESPD |
| | | | | | | | |

| **Physikalische Eigenschaften vor der Alterung** | | | | | | | |
|---|---|---|---|---|---|---|---|
| Shore Härte bei RT | Shore A | 73 | 77 | 74 | 48,8 | 51 | 47,3 |
| Shore Härte bei 70 °C | Shore A | 67 | 70 | 66 | 45,9 | 46,7 | 42,7 |
| Rückprallelast. b. RT | % | 15,8 | 15,5 | 15 | 58,7 | 53,8 | 51,2 |
| Rückprallelast. b. 70 °C | % | 38 | 37,5 | 34 | 68 | 64 | 61,2 |
| Modul 200 | MPa | 6,1 | 7,2 | 4,8 | -- | -- | -- |
| Modul 300 | MPa | -- | -- | -- | 4,4 | 5,4 | 3,9 |
| Zugfestigkeit | MPa | 12,7 | 10,9 | 11,5 | 13,8 | 9,2 | 8,7 |
| Reißdehnung | % | 394 | 294 | 396 | 610 | 461 | 519 |
| Abrieb | mm | -- | -- | -- | 95 | 102 | 106 |
| t10 | min | 0,69 | 0,34 | 0,22 | 2,7 | 1,8 | 1,7 |
| t5 | min | 0,32 | 0,23 | 0,16 | 2,4 | 1,6 | 1,5 |
| | | | | | | | |

| **Physikalische Eigenschaften nach der Alterung für 14 Tage bei 70 °C, Luft** | | | | | | | |
|---|---|---|---|---|---|---|---|
| Shore Härte bei RT | Shore A | 77,2 | 81,1 | 78,4 | 55,7 | 58,4 | 55,3 |
| Shore Härte bei 70 °C | Shore A | 73,6 | 77,4 | 74,8 | 53,8 | 55,8 | 52,1 |
| Rückprallelast. b. RT | % | 16,1 | 16,4 | 15,7 | 63,3 | 57,3 | 56 |
| Rückprallelast. b. 70 °C | % | 39,6 | 38,5 | 37,6 | 72 | 68,1 | 67,4 |
| Zugfestigkeit | MPa | 10,9 | 9,9 | 11,3 | 11 | 8,4 | 8,4 |
| Modul 200 | MPa | 8,3 | 9,9 | 7,2 | 4,4 | 5,2 | 4,1 |
| Modul 300 | MPa | -- | -- | -- | -- | -- | -- |
| Reißdehnung | % | 280 | 216 | 306 | 401 | 305 | 354 |

Wie aus den Tabellen 2 und 3 ersichtlich ist, weisen die Vulkanisate der Kautschukmischungen E1, E2, E3 und E4, die die erfindungsgemäßen Regenerate TESPD, ER1 und ER2 enthalten, höhere Rückprallelastizitäten auf als Kautschukmischungen die aus dem Stand der Technik bekannte Regenerate enthalten. Die Rückprallelastizität bei 70 °C stellt einen Rollwiderstandsindikator dar, sodass Fahrzeugluftreifen, die in wenigstens einer Kautschukmischung die erfindungsgemäßen Regenerate enthalten, erwartungsgemäß einen geringeren Spritverbrauch verursachen als Reifen mit im Stand der Technik bekannten Regeneraten. Des Weiteren zeigen die Kautschukmischungen E1 und E2 gegenüber den Mischungen V1, V2 und V3 einen vergleichsweise geringeren Druckverformungsrest. Gleichzeitig ist erkennbar, dass in der Regel die Prozesssicherheit bei den erfindungsgemäßen Mischungen zunimmt.

## Patentansprüche

1. Verfahren zur Regenerierung von schwefelvernetzten Gummivulkanisaten zu Regeneraten, **dadurch gekennzeichnet, dass** man bei der Regenerierung wenigstens ein Regenerierungsmittel verwendet, wobei das Regenerierungsmittel ausgewählt ist aus der Gruppe bestehend aus Dithiophosphorylpolysulfiden und/oder Silanen mit einer Polysulfangruppe.

2. Verfahren nach Anspruch 1, **dadurch gekennzeichnet, dass** das Dithiophosphorylpolysulfid die allgemeine Formel I 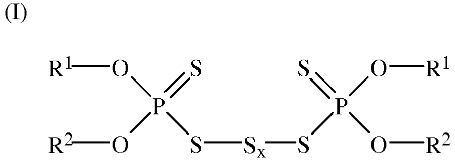 aufweist, wobei R¹ und R² gleich oder verschieden sind und ausgewählt sind aus linearen oder verzweigten C₃- bis C₂₀-Alkylresten und x = 1 bis 6 sein kann.

3. Verfahren nach Anspruch 2, **dadurch gekennzeichnet, dass** das Dithiophosphorylpolysulfid ein Bis-(O,O-2-Ethylhexyl-)Thiophosphorylpolysulfid ist.

4. Verfahren nach einem der Ansprüche 1 bis 3, **dadurch gekennzeichnet, dass** das Silan mit einer Polysulfangruppe die allgemeine Formel II (II) (R²O)_{3-y}R³_{y}-Si-R¹-Sₓ-R¹-Si-(OR²)_{3-z}R³_{z} aufweist, wobei x = 1 bis 8 ist und wobei die R¹ in einem Molekül gleich oder verschieden sind und ausgewählt sind aus linearen oder verzweigten C₁₋ bis C₁₈-Alkylresten, wobei die R² und R³ in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind.

5. Verfahren nach Anspruch 4, **dadurch gekennzeichnet, dass** das Silan mit einer Polysulfangruppe ein Bis(trialkoxysilyl)propylpolysulfan ist.

6. Verfahren nach Anspruch 4, **dadurch gekennzeichnet, dass** die Reste R² und/oder R³ zusätzlich 1 bis 10 Stickstoffatome (N) und/oder Sauerstoffatome (O) als Heteroatome in der Kohlenstoffkette enthalten.

7. Verfahren nach einem der Ansprüche 1 bis 3, **dadurch gekennzeichnet, dass** das Silan mit einer Polysulfangruppe die allgemeine Formel V
(V) (R²O)_{3-y}R³_{y}-Si-R¹-Sₓ-R¹-Si-(O₂R²)R³
aufweist, wobei x = 1 bis 8 ist und wobei die R¹ in einem Molekül gleich oder verschieden sind und ausgewählt sind aus linearen oder verzweigten C₁- bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind und wobei die R³ in einem Molekül gleich oder verschieden sind und ausgewählt sind aus linearen oder verzweigten C₁-bis C₁₀-Alkyl- oder Alkoxyresten.

8. Verfahren nach einem der Ansprüche 1 bis 3, **dadurch gekennzeichnet, dass** das Silan mit einer Polysulfangruppe die allgemeine Formel VI
(VI) (R²O₂)R³-Si-R¹-Sₓ-R¹-Si-(O₂R²)R³
aufweist, wobei x = 1 bis 8 ist und wobei die R¹ in einem Molekül gleich oder verschieden sind und ausgewählt sind aus linearen oder verzweigten C₁₋ bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei die R³ in einem Molekül gleich oder verschieden sind und ausgewählt sind aus linearen oder verzweigten C₁-bis C₁₀-Alkyl- oder Alkoxyresten.

9. Verfahren zur Regenerierung von schwefelvernetzten Gummivulkanisaten zu Regeneraten, **dadurch gekennzeichnet, dass** es wenigstens folgende Verfahrensschritte enthält:
- Vorlegen des zu regenerierenden schwefelvernetzten Gummivulkanisates in Mengen von 68 bis 98 Gew.-% in einem Innenmischer und
- Erwärmen des zu regenerierenden schwefelvernetzten Gummivulkanisates auf 50 bis 70 °C und
- Zugabe wenigstens eines Dithiophosphorylpolysulfides und/oder wenigstens eines Silanes mit einer Polysulfangruppe in Mengen von 2 bis 15 Gew.-% und
- Durchmischen der genannten Bestandteile zu einer Mischung für eine Dauer von 5 bis 35 Minuten bei einer Temperatur von 80 bis 150 °C.

10. Verfahren nach zumindest einem der vorhergehenden Ansprüche, **dadurch gekennzeichnet, dass** die schwefelvernetzten Gummivulkanisate aus Altreifen oder Förderbändern oder bei der Produktion von technischen Kautschukartikeln oder Fahrzeugluftreifen anfallendem vulkanisiertem Abfall stammen.

11. Regenerat, hergestellt nach einem der Ansprüche 1 bis 10.

12. Regenerat nach Anspruch 11 zur Herstellung von Fahrzeugluftreifen.

13. Verwendung von Dithiophosphorylpolysulfiden als Regenerierungsmittel zur Regenerierung von schwefelvernetzten Gummivulkanisaten.

14. Verwendung von Silanen mit einer Polysulfangruppe als Regenerierungsmittel zur Regenerierung von schwefelvernetzten Gummivulkanisaten.

## Claims

1. Process for regenerating sulfur-crosslinked rubber vulcanizates to give regenerates, **characterized in that** at least one regenerating agent is used in the regeneration, where the regenerating agent is selected from the group consisting of dithiophosphoryl polysulfides and silanes having a polysulfane group.

2. Process according to Claim 1, **characterized in that** the dithiophosphoryl polysulfide has the general formula I 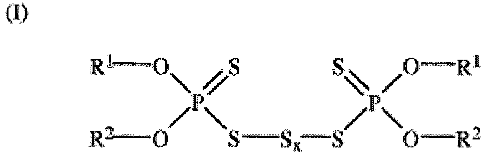 where R¹ and R² are identical or different and are selected from among linear or branched C₃-C₂₀-alkyl groups and x = 1 to 6.

3. Process according to Claim 2, **characterized in that** the dithiophosphoryl polysulfide is a bis(O,O-2-ethylhexyl)thiophosphoryl polysulfide.

4. Process according to any of Claims 1 to 3, **characterized in that** the silane having a polysulfane group has the general formula II (II) (R²O)_{3-y}R³_{y}-Si-R¹-Sₓ-R¹-Si-(OR²)_{3-z}R³_{z} where x = 1 to 8 and the groups R¹ in a molecule are identical or different and are selected from among linear or branched C₁-C₁₈-alkyl groups, the groups R² and R³ in a molecule are identical or different and are selected from among linear or branched or cyclic saturated C₁-C₃₀-alkyl groups and y and z are identical or different and are each from 0 to 3.

5. Process according to Claim 4, **characterized in that** the silane having a polysulfane group is a bis(trialkoxysilyl)propyl polysulfane.

6. Process according to Claim 4, **characterized in that** the groups R² and/or R³ additionally contain from 1 to 10 nitrogen atoms (N) and/or oxygen atoms (O) as heteroatoms in the carbon chain.

7. Process according to any of Claims 1 to 3, **characterized in that** the silane having a polysulfane group has the general formula V
**(V)** **(R²O)_{3-y}R_{3y}-Si-R¹-Sₓ-R¹-Si-(OR²)R³**
where x = 1 to 8 and the groups R¹ in a molecule are identical or different and are selected from among linear or branched C₁-C₁₈-alkyl groups, the groups R² in a molecule are identical or different and are selected from among linear or branched or cyclic saturated C₁-C₃₀-alkyl groups and y and z are identical or different and are each from 0 to 3 and the groups R³ in a molecule are identical or different and are selected from among linear or branched C₁-C₁₀-alkyl or alkoxy groups.

8. Process according to any of Claims 1 to 3, **characterized in that** the silane having a polysulfane group has the general formula VI
**(VI)** **(R²O₂)R³-Si-R¹-Sₓ-R¹-Si-(O₂R²)R³**
where x = 1 to 8 and the group R¹ in a molecule are identical or different and are selected from among linear or branched C₁-C₁₈-alkyl groups, the groups R² in a molecule are identical or different and are selected from among linear or branched or cyclic saturated C₁-C₃₀-alkyl groups and the groups R³ in a molecule are identical or different and are selected from among linear or branched C₁-C₁₀-alkyl or alkoxy groups.

9. Process for regenerating sulfur-crosslinked rubber vulcanizates to give regenerates, **characterized in that** it contains at least the following process steps:
- placing of the sulfur-crosslinked rubber vulcanizate to be regenerated in amounts of from 68 to 98% by weight in a mechanical mixer and
- heating of the sulfur-crosslinked rubber vulcanizate to be regenerated to from 50 to 70°C and
- addition of at least one dithiophosphoryl polysulfide and/or at least one silane having a polysulfane group in amounts of from 2 to 15% by weight and
- mixing of the constituents mentioned to form a mixture for a time of from 5 to 35 minutes at a temperature of from 80 to 150°C.

10. Process according to at least one of the preceding claims, **characterized in that** the sulfur-crosslinked rubber vulcanizates originate from used tires or conveyor belts or vulcanized waste obtained in the production of industrial rubber articles or pneumatic vehicle tires.

11. Regenerate produced according to any of Claims 1 to 10.

12. Regenerate according to Claim 11 for producing pneumatic vehicle tires.

13. Use of dithiophosphoryl polysulfides as regenerating agents for regenerating sulfur-crosslinked rubber vulcanizates.

14. Use of silanes having a polysulfane group as regenerating agents for regenerating sulfur-cross-linked rubber vulcanizates.

## Revendications

1. Procédé de régénération de vulcanisats de caoutchouc vulcanisés au soufre en caoutchoucs régénérés, **caractérisé en ce qu'**on utilise lors de la régénération au moins un agent de régénération, l'agent de régénération étant choisi dans le groupe consistant en les polysulfures de dithiophosphoryle et/ou les silanes comportant un groupe polysulfane.

2. Procédé selon la revendication 1, **caractérisé en ce que** le polysulfure de dithiophosphoryle présente la formule générale I 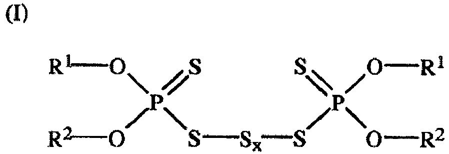 dans laquelle R¹ et R² sont identiques ou différents et sont choisis parmi les groupes alkyle en C₃ à C₂₀ à chaîne droite ou ramifiée, et x peut valoir 1 à 6.

3. Procédé selon la revendication 2, **caractérisé en ce que** le polysulfure de dithiophosphoryle est un polysulfure de bis(O,O-2-éthylhexyl)thiophosphoryle.

4. Procédé selon l'une des revendications 1 à 3, **caractérisé en ce que** le silane comportant un groupe polysulfane présente la formule générale II (II) (R²O)_{3-y}R³_{y}-Si-R¹Sₓ-R¹Si-(OR²)_{3-z}R³_{z} dans laquelle x = 1 à 8, et les groupes R¹ sont, dans une molécule, identiques ou différents, et sont choisis parmi les groupes alkyle en C₁ à C₁₈ à chaîne droite ou ramifiée, les groupes R² et R³ étant, dans une molécule, identiques ou différents et étant choisis parmi les groupes alkyle en C₁ à C₃₀ saturés, à chaîne droite ou ramifiée, ou cyclique, et y et z étant identiques ou différents, et valant 0 à 3.

5. Procédé selon la revendication 4, **caractérisé en ce que** le silane comportant un groupe polysulfane est un bis(trialcoxysilyl)propylpolysulfane.

6. Procédé selon la revendication 4, **caractérisé en ce que** les groupes R² et/ou R³ contiennent en outre en tant qu'hétéroatomes dans la chaîne carbonée 1 à 10 atomes d'azote (N) et/ou atomes d'oxygène (O).

7. Procédé selon l'une des revendications 1 à 3, **caractérisé en ce que** le silane comportant un groupe polysulfane présente la formule générale V (V) (R²O)_{3-y}R³_{y}-Si-R¹-Sₓ-R¹-Si-(O₂R²) R³ dans laquelle x = 1 à 8, et les groupes R¹, dans une molécule, sont identiques ou différents et sont choisis parmi les groupes alkyle en C₁ à C₁₈ à chaîne droite ou ramifiée, les groupes R², dans une molécule, étant identiques ou différents et étant choisis parmi les groupes alkyle en C₁ à C₃₀ à chaîne droite ou ramifiée, ou cyclique, et y et z étant identiques ou différents et valant 0 à 3, et les groupes R³ étant, dans une molécule, identiques ou différents et étant choisis parmi les groupes alkyle ou alcoxy en C₁ à C₁₀ à chaîne droite ou ramifiée.

8. Procédé selon l'une des revendications 1 à 3, **caractérisé en ce que** le silane comportant un groupe polysulfane présente la formule générale VI (VI) (R²O₂)R³-Si-^{R1}-Sₓ-R¹-Si-(O₂R²)R³ dans laquelle x = 1 à 8, et les groupes R¹, dans une molécule, sont identiques ou différents et sont choisis parmi les groupes alkyle en C₁ à C₁₈ à chaîne droite ou ramifiée, les groupes R² étant, dans une molécule, identiques ou différents et étant choisis parmi les groupes alkyle en C₁ à C₃₀ saturés à chaîne droite ou ramifiée, ou cyclique, et les groupes R³ étant dans une molécule identiques ou différents et étant choisis parmi les groupes alkyle ou alcoxy en C₁ à C₁₀ à chaîne droite ou ramifiée.

9. Procédé de régénération de vulcanisats de caoutchouc vulcanisés au soufre en des caoutchoucs régénérés, **caractérisé en ce qu'**il comprend au moins les étapes de procédé suivantes :
- mise en place, dans un mélangeur interne, du vulcanisat de caoutchouc vulcanisé au soufre devant être régénéré en des quantités de 68 à 98 % en poids et
- chauffage à 50 à 70°C du vulcanisat de caoutchouc vulcanisé au soufre à régénérer, et
- addition, en des quantités de 2 à 15 % en poids, d'au moins un polysulfure de dithiophosphoryle et/ou d'au moins un silane comportant un groupe polysulfane, et
- mélange intime, pendant une durée de 5 à 35 minutes à une température de 80 à 150°C, des constituants mentionnés, pour donner un mélange.

10. Procédé selon au moins l'une des revendications précédentes, **caractérisé en ce que** les vulcanisats de caoutchouc vulcanisés au soufre proviennent de pneus usés ou de bandes transporteuses, ou encore de déchets vulcanisés obtenus lors de la production d'articles techniques en caoutchouc ou de pneus d'avion.

11. Caoutchouc régénéré, fabriqué selon l'une des revendications 1 à 10.

12. Caoutchouc régénéré selon la revendication 11 pour la fabrication de pneus d'avion.

13. Utilisation de polysulfures de dithiophosphoryle en tant qu'agents de régénération pour la régénération des vulcanisats de caoutchouc vulcanisés au soufre.

14. Utilisation de silanes comportant un groupe polysulfane en tant qu'agent de régénération pour la régénération de vulcanisats de caoutchouc vulcanisés au soufre.
